# EUROPEAN PATENT SPECIFICATION

(11) **EP 2 375 536 B1**
(45) Date of publication and mention of the grant of the patent: **29.06.2016**
(21) Application number: 11160463.3
(22) Date of filing: 30.03.2011
(51) Int. Cl.: H01M 10/44, H01M 10/46, H01M 10/48, B25F 5/00, H02J 7/00, H02J 1/00, H01M 16/00, H01M 8/04

(54) **Electric Power Tool, and Program**
Elektrowerkzeug und Programm
Outil électrique et programme

(30) Priority: 31.03.2010 JP 2010083319
(43) Date of publication of application: 12.10.2011
(73) Proprietor: Makita Corporation, Anjo Aichi 446-8502 (JP)
(72) Inventor: Umemura, Takuya, Anjo, Aichi 446-8502 (JP); Sakai, Mamoru, Anjo, Aichi 446-8502 (JP); Noda, Masafumi, Anjo, Aichi 446-8502 (JP); Yamada, Toru, Anjo, Aichi 446-8502 (JP); Suzuki, Hitoshi, Anjo, Aichi 446-8502 (JP)
(74) Representative: Kramer Barske Schmidtchen Patentanwälte PartG mbB

(56) References cited:
- WO-A1-01/71883
- WO-A1-2007/094246
- GB-A- 2 352 887
- JP-A- 2009 135 077
- US-A1- 2010 065 295

## Description

### BACKGROUND

The present invention relates to an electric power tool including a rechargeable battery and a fuel battery.

One example of an electric power tool disclosed in Unexamined Japanese Patent Application Publication No. 2008-260118 is provided with a rechargeable battery and a fuel battery as power sources of an electric motor. More particularly, in this electric power tool, the rechargeable battery is electrically connected to the electric motor, and the fuel battery is electrically connected to the rechargeable battery. With configuration of such electric power tool, while electric power is supplied from the rechargeable battery to the electric motor, electric power is supplied from the fuel battery to the rechargeable battery so as to charge the rechargeable battery.

US 2010/0065295 A1, on which the preamble of claim 1 is based, relates to a cordless power tool in which a front-end tool provided in a housing is driven by an electric motor which uses a battery attached within the housing as a motive power supply unit.

WO 2007/094246 A1 relates to power supply units for usage in electronic devices, in particular a power supply unit in which low-voltage direct current power supply such as a fuel battery is used as a primary power supply, and voltage output from the direct current power supply is boosted to charge the secondary battery, wherein no remaining amount of power in the rechargeable battery is used.

GB 2 352 887 relates to a cordless telephone with a battery backup function.

WO 01/71883 A1 relates to a device for charging a starting battery in a vehicle without usage of fuel battery.

JP 2009 135077 A relates to a power supply system including a fuel cell which can perform power generation properly by introducing various kinds of alcohol fuel regardless of the types of the alcohol.

In the above example of electric power tool, the rechargeable battery is connected to the fuel battery at all times- Thus, regardless of a remaining amount of power in the rechargeable battery, power supply from the fuel battery to the rechargeable battery is conducted at all times. The rechargeable battery is always being
charged. Accordingly, in the above example, the fuel battery cannot be used at the highest power generation efficiency. Fuel consumption is expedited. Moreover, since an auxiliary unit such as a pump is always operated, hours of power supply from the power sources as a whole, including the rechargeable battery and the fuel battery, are shortened. There is a problem that operable hours of the electric motor are shortened.

Also, if a capacity of a fuel tank of the fuel battery is increased in order to prolong hours of power supply, there is another problem that the fuel battery becomes large in size, and thus the electric power tool becomes large in size.

It is preferable that one aspect of the present invention can provide an electric power tool which has long operation hours without necessity of making large in size a fuel battery which charges a rechargeable battery.

An electric power tool according to a first aspect of the present invention includes a tool element, an electric motor, a rechargeable battery, a fuel battery, a state measuring unit, and a control unit.

The electric motor receives power supply to drive the tool element. The rechargeable battery is electrically connected to the electric motor and supplies power to the electric motor. The fuel battery is electrically connected to the rechargeable battery and charges the rechargeable battery.

The state measuring unit measures a state of the rechargeable battery. The control unit controls charging of the rechargeable battery by the fuel battery at least based on the state of the rechargeable battery measured by the state measuring unit.

In the electric power tool configured as such, the rechargeable battery is not always charged by the fuel battery but the charging is controlled based on the state of the rechargeable battery. Thus, the electric power tool can achieve long operation hours without necessity of making the fuel battery large in size.

The tool element of the electric power tool may be detachably provided, or may be undetachably provided, to the electric power tool.

The state measuring unit may measure anything with regard to the state of the rechargeable battery. For example, the state measuring unit may measure at least a remaining amount of power in the rechargeable battery.

In this case, the control unit may control the charging at least based on the remaining amount of power in the rechargeable battery measured by the state measuring unit.

In this configuration, for example, when the remaining amount of power in the rechargeable battery is insufficient and charging of the rechargeable battery is required, charging from the fuel battery may be conducted. If the remaining amount of power in the rechargeable battery is sufficient and charging of the rechargeable battery is not required, charging from the fuel battery may not be conducted. Then, power consumption by an auxiliary unit such as a pump of the fuel battery can be suppressed. Operation hours of the fuel battery can be prolonged.

In other words, the electric power tool can have longer operation hours.

The state measuring unit may measure the remaining amount of power in the rechargeable battery in any manner. For example, the state measuring unit may measure the remaining amount of power in the rechargeable battery based on an output voltage of the rechargeable battery.

In this case, the remaining amount of power in the rechargeable battery can be measured using a simple manner of detecting an output voltage of the rechargeable battery.

The state measuring unit may further measure an output current of the rechargeable battery.

In this case, the control unit may control the charging at least based on the remaining amount of power in the rechargeable battery and the output current of the rechargeable battery measured by the state measuring unit.

In this way, the charging of the rechargeable battery can be controlled based on the remaining amount of power in the rechargeable battery as well as the output current of the rechargeable battery. A charging manner can be implemented such that charging of the rechargeable battery is not conducted when the output current is large, for example, during the operation of the electric motor, and charging of the rechargeable battery is conducted when the output current is small, for example, under suspension of the electric motor.

The electric power tool may further include a rechargeable battery temperature measuring unit that measures a temperature of the rechargeable battery. The state measuring unit may measure at least one of an output voltage and an output current of the rechargeable battery.

In this case, the control unit may control the charging at least based on the at least one of the output voltage and the output current of the rechargeable battery measured by the state measuring unit and the temperature of the rechargeable battery measured by the rechargeable battery temperature measuring unit.

In this way, charging and discharging to and from the rechargeable battery can be efficiently conducted according to a charging property of the rechargeable battery which varies depending on the temperature. Operation hours of the electric power tool can be efficiently prolonged.

The rechargeable battery temperature measuring unit may measure an internal temperature of the rechargeable battery, an temperature on outside surface of the rechargeable battery or an ambient temperature around the rechargeable battery.

The electric power tool may further include a fuel battery output measuring unit that measures at least one of an output voltage and an output current of the fuel battery, and a fuel battery temperature measuring unit that measures a temperature of the fuel battery.

In this case, the control unit may control the charging at least based on at least one of the output voltage and the output current of the rechargeable battery measured by the state measuring unit, the temperature of the rechargeable battery measured by the rechargeable battery temperature measuring unit, at least one of the output voltage and the output current of the fuel battery measured by the fuel battery output measuring unit, and the temperature of the fuel battery measured by the fuel battery temperature measuring unit.

In this way, charging and discharging to and from the rechargeable battery can be efficiently conducted according to a power generation property of the fuel battery which varies depending on the temperature and the charging property of the rechargeable battery which varies depending on the temperature. Operation hours of the electric power tool can be efficiently prolonged.

The fuel battery temperature measuring unit may measure an internal temperature of the fuel battery, a temperature on outside surface of the fuel battery or an ambient temperature around the fuel battery.

The control unit may control the charging of the rechargeable battery by the fuel battery in any manner. For example, the control unit may control the charging by switching charging patterns of the rechargeable battery by the fuel battery.

The state measuring unit may measure an output current of the rechargeable battery, and the control unit may stop the charging when a value of the output current measured by the state measuring unit exceeds a predetermined threshold, and carries out the charging when the value of the output current is equal to or lower than the threshold.

In this way, the rechargeable battery can be charged when the value of the output current of the rechargeable battery is equal to or lower than the threshold and the remaining amount of power in the rechargeable battery is not quickly reduced, and the charging can be stopped when the value of the output current of the rechargeable battery exceeds the threshold and the remaining amount of power in the rechargeable battery is quickly reduced.

Accordingly, operation hours of the electric power tool can be prolonged without necessity of making the fuel battery large in size.

A program in a second aspect of the present invention makes a computer provided on an electric power tool including a rechargeable battery and a fuel battery that charges the rechargeable battery execute a state measuring step and a control step.

The computer, in the state measuring step, measures a state of the rechargeable battery and, in the control step, controls charging of the rechargeable battery by the fuel battery at least based on the state of the rechargeable battery measured in the state measuring step.

According to this program, the computer can be made function as part of the electric power tool according to the first aspect.

The aforementioned computer may be a known computer or a computer configured to be suitable for an electric power tool.

The aforementioned program may be stored in a ROM or a backup RAM incorporated in the computer, and may be used by being loaded to the computer from the ROM or the backup RAM or loaded to the computer via a network.

The aforementioned program may be recorded in a recording medium readable on the computer. Examples of the recording medium include, for example, flexible disks (FD), magnetooptical (MO) disks, DVD, CD-ROM, Blu-ray disks, HD-DVD, hard disks, portable semiconductor memory (e.g., USB memory, memory cards, etc.), and so on.

### BRIEF DESCRIPTION OF THE DRAWINGS

The present invention will now be described by way of examples with reference to the accompanying drawings, in which:
FIG. 1 is a block diagram showing a schematic structure of an electric power tool according to a first embodiment to which the present invention is applied;
FIGS. 2A and 2B are flowcharts illustrating a flow of a control process according to the first embodiment;
FIG. 3 is a diagram showing an example of a load current and an average load current while the electric power tool is in use, wherein the load current is indicated by a solid line, the average load current is indicated by a dashed-dotted line, and a charging current is indicated by a dashed line;
FIG. 4 is a block diagram showing a schematic structure of an electric power tool according to a second embodiment;
FIG. 5 is a flowchart illustrating a flow of a control process according to the second embodiment;
FIG. 6 is a block diagram showing a schematic structure of an electric power tool according to a third embodiment;
FIG. 7 is a flowchart illustrating a flow of a control process according to the third embodiment; and
FIG. 8 is a diagram showing charging control based on a remaining amount of power in a rechargeable battery.

### DETAILED DESCRIPTION OF THE PREFERRED EMBODIMENTS

Embodiments of the present invention are not limited to those described below, and may take various forms within the technical scope of the present invention.

### [First Embodiment]

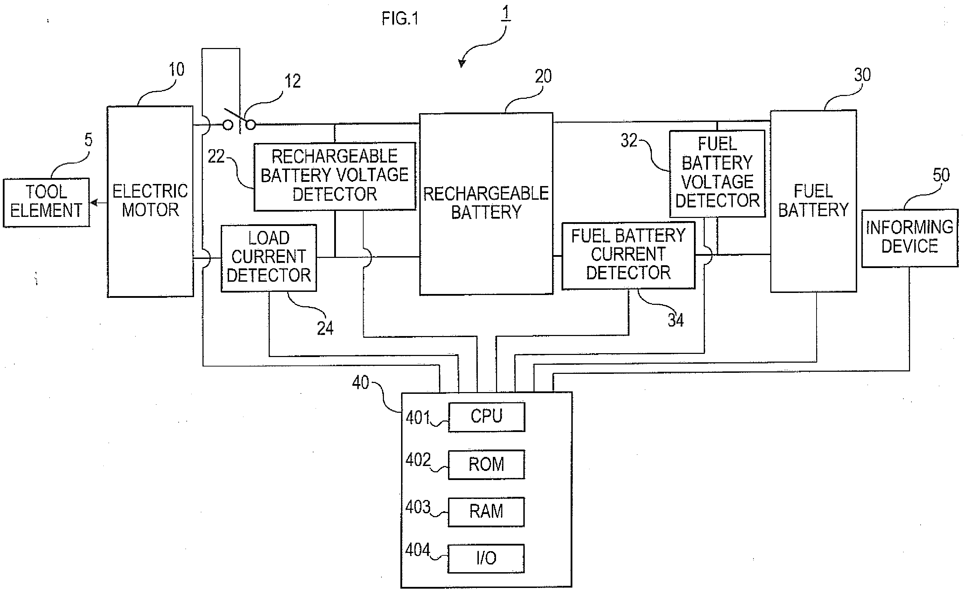

As shown in FIG. 1, the electric power tool 1 includes a tool element 5, an electric motor 10, an motor switch 12, a rechargeable battery (secondary battery) 20, a fuel battery 30, a rechargeable battery voltage detector 22, a load current detector 24, a fuel battery voltage detector 32, a fuel battery current detector 34, a controller 40, and an informing device 50.

The tool element 5 is attached to a driving shaft (shaft of a rotor) of the electric motor 10, and driven by receiving a drive force from the driving shaft. The tool element 5 may be detachably attached to the driving shaft or may be undetachably attached to the driving shaft. The tool element 5 may be directly attached to the driving shaft of the electric motor 10 or may be indirectly attached to the driving shaft via a transmission mechanism of the drive force such as a gear or pulley and a belt attached to the driving shaft. Examples of the tool element 5 include a driver, drill, wrench, and so on.

The electric motor 10 is a direct current (DC) motor, which receives direct current power supply and drives the tool element 5 attached to the drive shaft of the electric motor 10. The motor switch 12 is an on/off switch installed on a conductive line which electrically connects a positive electrode output terminal of the rechargeable battery 20 and the electric motor 10. The motor switch 12 electrically connects the positive electrode output terminal of the rechargeable battery 20 and the electric motor 10 or interrupts connection between the positive electrode output terminal of the rechargeable battery 20 and the electric motor 10 according to a command signal from the controller 40, and turns on/off the power supply from the rechargeable battery 20 to the electric motor 10.

The rechargeable battery 20 supplies electric power to the electric motor 10 via a conductive line and the motor switch 12. The rechargeable battery 20 may be of any type of rechargeable battery. For example, the rechargeable battery 20 may be a lithium ion battery or other rechargeable battery such as a nickel-cadmium battery or a nickel hydride battery.

The fuel battery 30 is electrically connected to the rechargeable battery 20 via a conductive line, and charges the rechargeable battery 20 with electric power generated by power generation reaction in a fuel battery cell (fuel battery stack) of the fuel battery 30.

The fuel battery 30 may be of any type of fuel battery. For example, in the first embodiment, the fuel battery 30 is a DFC (Direct Fuel Cell) which directly supplies a liquid fuel such as methanol, dimethyl ether or hydrazine to the not shown fuel battery cell (fuel battery stack) inside the fuel battery 30 without a reformer. However, the fuel battery 30 may be of other type of fuel battery such as a PEFC (Proton Exchange membrane Fuel Cell) and a SOFC (Solid Oxide Fuel Cell) which use a reformer.

The rechargeable battery voltage detector 22 outputs a detection signal having a voltage value according to magnitude of the output voltage of the rechargeable battery 20. Particularly, the rechargeable battery voltage detector 22 is connected between the positive electrode output terminal and a negative electrode output terminal of the rechargeable battery 20 (i.e., the rechargeable battery voltage detector 22 is connected in parallel to the rechargeable battery 20).

The fuel battery voltage detector 32 outputs a detection signal having a voltage value according to magnitude of the output voltage of the fuel battery 30. Particularly, the fuel battery voltage detector 32 is connected between a positive electrode output terminal and a negative electrode output terminal of the fuel battery 30 (i.e., the fuel battery voltage detector 32 is connected in parallel to the fuel battery 30).

Generally, as the remaining amount of power in the rechargeable battery 20 and the fuel battery 30 decrease, the output voltages thereof also decrease. Thus, by measuring values of the output voltages of the rechargeable battery 20 and the fuel battery 30, the remaining amount of power in the rechargeable battery 20 and the fuel battery 30 can be measured based on the values of the measured output voltages. Also, a relation between the remaining amount of power and the output voltage is defined by the type of the rechargeable battery 20 and the fuel battery 30 to be used. Such property is commonly known and thus, explanation thereof is omitted.

The load current detector 24 outputs a detection signal having a voltage value according to magnitude of a current (load current) outputted from the rechargeable battery 20 and flowing to the electric motor 10. Particularly, the load current detector 24 is serially connected via a conductive line between the electric motor 10 and the negative electrode output terminal of the rechargeable battery 20. Based on the detection signal of the load current detector 24, a value of the load current can be measured, and magnitude of a load applied to the electric motor 10 can be further measured.

The fuel battery current detector 34 outputs a detection signal having a voltage value according to magnitude of a current from the fuel battery 30 to the rechargeable battery 20. Particularly, the fuel battery current detector 34 is serially connected between the negative electrode output terminal of the rechargeable battery 20 and a negative electrode output terminal of the fuel battery 30.

The informing device 50 informs a user of the electric power tool 1 and so on that the electric power tool 1 is in inoperable state. The informing device 50 may inform the user and so on that the electric power tool 1 is in inoperable state through light emission via an LED, an incandescent lamp or others, or through sound such as electronic sound or voice by a buzzer or a speaker.

Here, the "inoperable state" includes, for example, a state where the remaining amount of power in the rechargeable battery 20 is small and charging of the rechargeable battery 20 is required, or a state where the rechargeable battery 20 is unusable.

The controller 40 includes at least a CPU 401, a ROM 402, a RAM 403 and an input/output (I/O) interface 404. The controller 40 controls charging of the rechargeable battery 20 by the fuel battery 30 based on the remaining amount of power in the rechargeable battery 20 measured from the voltage value of the detection signal of the rechargeable battery voltage detector 22 and the load applied to the electric motor 10 measured from the voltage value of the detection signal of the load current detector 24.

Particularly, the controller 40 performs the following processes (A) to (G).
(A) It is determined whether or not the output current of the fuel battery 30 is equal to or lower than an average load current of the rechargeable battery 20.
(B) In case that the output current is equal to or lower than the average load current, and that the remaining amount of power in the rechargeable battery 20 decreases to or lower than a first threshold (e.g., 80% of total capacity of the rechargeable battery 20), the output of the fuel battery 30 is switched from off to low. Here, the "low" output means an output value, between a rated output and an off output of the fuel battery 30, which is preset to increase power generation efficiency.
(C) In case that the remaining amount of power in the rechargeable battery 20 decreases to or lower than a second threshold (e.g., 30% of total capacity of the rechargeable battery 20) which is smaller than the first threshold, the output of the fuel battery 30 is switched to high. Here, the "high" output means the rated output of the fuel battery 30.
(D) In case that the remaining amount of power in the rechargeable battery 20 decreases to a lower limit (e.g., 0% of total capacity of the rechargeable battery 20), the output of the fuel battery 30 is kept as high, and the electric power tool 1 is made unusable (power supply to the electric motor 10 is turned off).
(E) In determination in the above (A), in case that the output current is larger than the average load current, and that the remaining amount of power in the rechargeable battery 20 increases to the second threshold, the output of the fuel battery 30 is switched to high, and the electric power tool 1 is made usable (power supply to the electric motor 10 is turned on).
(F) Further, in case that the remaining amount of power in the rechargeable battery 20 increases to a third threshold (e.g., 50% of total capacity of the rechargeable battery 20) between the first threshold and the second thresholds, the output of the fuel battery 30 is switched from high to low.
(G) Further, in case that the remaining amount of power in the rechargeable battery 20 increases to an upper limit (e.g., 100% of total capacity of the rechargeable battery 20), the output of the fuel battery 30 is switched from low to off.

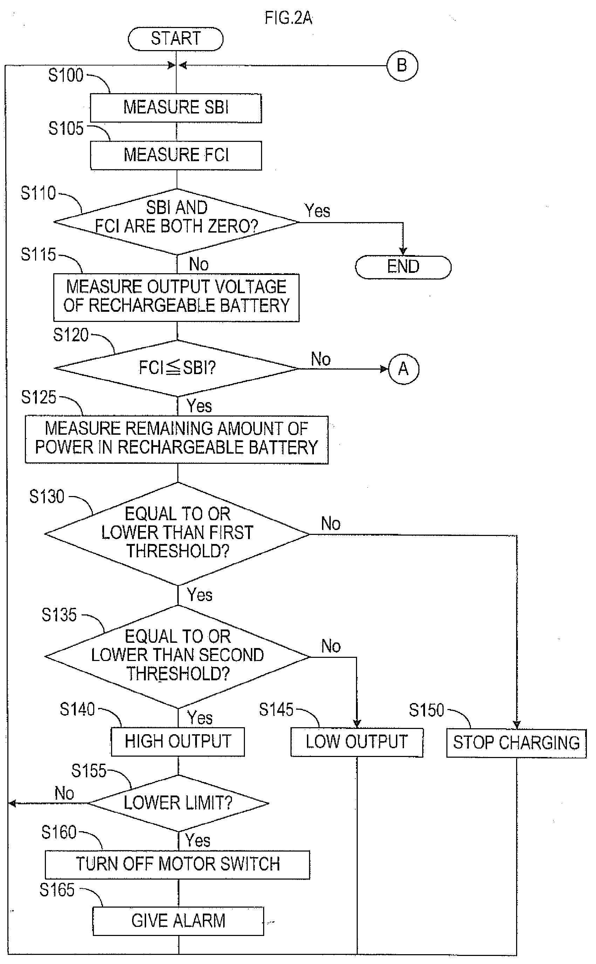

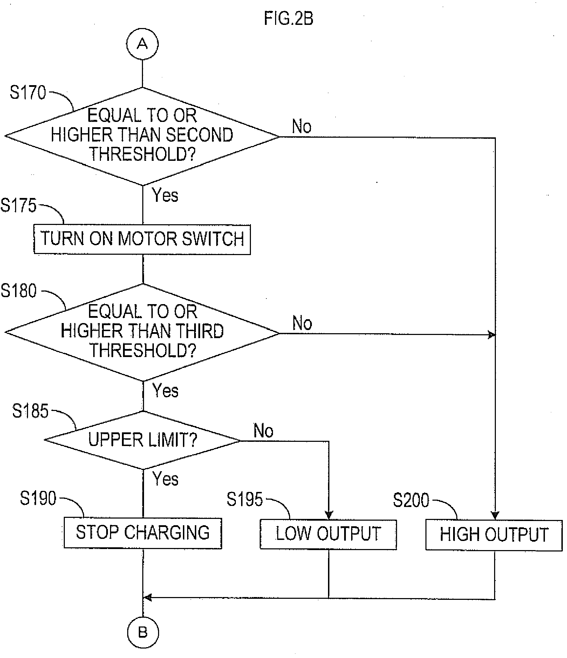

Next, a control process executed in the controller 40 will be described based on FIGS. 2A and 2B. A program of the control process is stored in the ROM 402, and is executed by the CPU 401 when a not shown main switch of the electric power tool 1 is turned on.

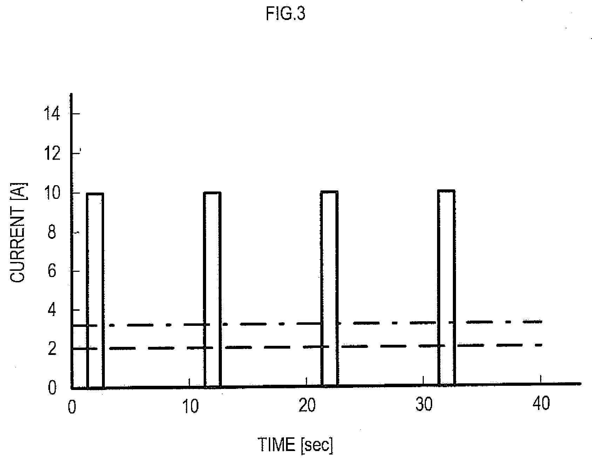

As shown in FIGS. 2A and 2B, in the control process, firstly in 5100, an average load current value of the rechargeable battery 20 is measured. The average load current value is obtained by measuring load currents based on the voltage values of the detection signals of the load current detector 24 for a certain period and averaging of the measured load currents (see FIG. 3).

In subsequent S105, an output current value of the fuel battery 30 is measured based on the voltage value of the detection signal of the fuel battery current detector 34. In subsequent 5110, it is determined whether or not the average load current value (SBI: Secondary Battery's Intensity of electric current) measured in S100 and the output current value (FCI: Fuel Cell's Intensity of electric current) measured in S105 are both zero.

If it is determined that both the SBI and the FCI are zero (S110: Yes), the process is ended. If it is determined that at least one of the SBI and the FCI is not zero (S110: No), the process moves to S115.

In subsequent S115, an output voltage value of the rechargeable battery 20 is measured based on the voltage value of the detection signal of the rechargeable battery voltage detector 22. In subsequent S120, the SBI measured in S100 is compared with the FCI measured in S105, and then it is determined whether or not the FCI is equal to or smaller than the SBI (FCI≦ SBI).

If it is determined that the FCI is equal to or smaller than the SBI (S120: Yes), the process moves to S125. If it is determined that the FCI is not equal to or smaller than the SBI (S120: No), the process moves to S170.

In subsequent S125, the remaining amount of power in the rechargeable battery 20 is measured based on the output voltage value of the rechargeable battery 20 measured in S115. In subsequent S130, it is determined whether or not the remaining amount of power is equal to or lower than the first threshold.

If it is determined that the remaining amount of power is equal to or lower than the first threshold (S130: Yes), the process moves to S135. If it is determined that the remaining amount of power is higher than the first threshold (S130: No), the process moves to S150.

In S135, it is determined whether or not the measured remaining amount of power in the rechargeable battery 20 is equal to or lower than the second threshold.

If it is determined that the remaining amount of power is equal to or lower than the second threshold (S135: Yes), the process moves to S140. If it is determined that the remaining amount of power is higher than the second threshold (S135: No), the process moves to S145.

In S140, by increasing a supply amount of fuel to the fuel battery 30 up to the rated value, the output of the fuel battery 30 is switched from low to high. The process moves to S155.

In S145, the output of the fuel battery 30 is switched to low to initiate charging of the rechargeable battery 20. In order to switch the output of the fuel battery 30 to low, the supply amount of fuel such as methanol supplied to the fuel battery 30 may be reduced by a certain amount from the rated value.

Here, the fuel battery 30 is efficient and can reduce the supply amount of fuel in a low output state. Thus, by switching the output of the fuel battery 30 to low, operation hours of the fuel battery 30 can be prolonged. Further, due to reduction of load of the fuel battery 30 and the rechargeable battery 20, the fuel battery 30 and the rechargeable battery 20 last a long time.

In S150, by stopping fuel supply to the fuel battery 30, charging from the fuel battery 30 to the rechargeable battery 30 is stopped.

In S155, it is determined whether or not the measured remaining amount of power in the rechargeable battery 20 has reached the lower limit.

If it is determined that the remaining amount of power has reached the lower limit (S155: Yes), the process moves to S160. If it is determined that the remaining amount of power has not reached the lower limit (S155: No), the process returns to S100. The control process is repeated.

In S160, the motor switch 12 is turned off, and power supply to the electric motor 10 is interrupted. In subsequent S165, an alarm signal is outputted to urge the informing device 50 to give alarm.

The alarm signal may be an on/off signal in case that the informing device 50 is constituted by an LED or an incandescent lamp or by a buzzer or a speaker for outputting an electronic sound. The alarm signal may be an output command signal in case that voice is outputted by a speaker.

After the alarm signal is outputted, the process returns to S100. The control process is repeated.

In S170 (see FIG. 2B), it is determined whether or not the measured remaining amount of power in the rechargeable battery 20 is equal to or higher than the second threshold. If it is determined that the remaining amount of power is equal to or higher than the second threshold (S170: Yes), the process moves to S175. If it is determined that the remaining amount of power in the rechargeable battery 20 is lower than the second threshold (S170: No), the process moves to S200.

In S175, the motor switch 12 is turned on. Power supply to the electric motor 10 is started.

In subsequent S180, it is determined whether or not the measured remaining amount of power in the rechargeable battery 20 is equal to or higher than the third threshold. If it is determined that the remaining amount of power is equal to or higher than the third threshold (S180: Yes), the process moves to S185. If it is determined that the remaining amount of power in the rechargeable battery 20 is lower than the third threshold (S180: No), the process moves to S200.

In S185, it is determined whether or not the measured remaining amount of power in the rechargeable battery 20 has reached the upper limit. If it is determined that the remaining amount of power has reached the upper limit (S185: Yes), the process moves to S190. If it is determined that the remaining amount of power has not reached the upper limit (S185: No), the process moves to S195.

In S190, after charging from the fuel battery 30 to the rechargeable battery 20 is stopped by stopping fuel supply to the fuel battery 30, the process returns to S100. The control process is repeated.

In S195, the output of the fuel battery 30 is switched from high to low by decreasing the supply amount of fuel to the fuel battery 30 by a predetermined amount from rated value. Thereafter, the process returns to S100, and the control process is repeated.

In S200, the output of the fuel battery 30 is switched to high and charging of the rechargeable battery 20 is started. Thereafter, the process returns to S100. The control process is repeated. In order to switch the output of the fuel battery 30 to high, the supply amount of fuel such as methanol supplied to the fuel battery 30 may be set to the rated value.

In the above described electric power tool 1, power is supplied to the electric motor 10 from the rechargeable battery 20 which is suitable for supplying a large instant consumption power. In order to charge the rechargeable battery 20, the fuel battery 30 which is not suitable for supplying a large instant consumption power is used.

Upon charging from the fuel battery 30 to the rechargeable battery 20, the remaining amount of power in the rechargeable battery 20 is measured and the load current of the electric motor 10 is measured as the load applied to the electric motor 10, to be adapted to the power consumption property of the electric power tool 1.

Also, the controller 40 controls the charging of the rechargeable battery 20 by the fuel battery 30, based on the measured remaining amount of power in the rechargeable battery 20 and the measured load current of the electric motor 10.

Accordingly, operation hours of the fuel battery 30 in respect to a certain amount of fuel can be prolonged. In other words, the fuel battery 30 can be reduced in size. Further, the electric power tool 1 can have long operation hours.

Also, since the remaining amount of power in the rechargeable battery 20 is measured based on the voltage value of the detection signal of the rechargeable battery voltage detector 22 and the load current of the electric motor 10 is measured based on the voltage value of the detection signal of the load current detector 24, the remaining amount of power and the load current can be measured with easy and simple configuration, by means of conventional techniques. Accordingly, the electric power tool 1 can be reduced in size and weight, and further can be inexpensive.

In case that the remaining amount of power in the rechargeable battery 20 is small, alarm is given which indicates that the electric power tool 1 is unusable. Thus, use of the electric power tool 1 during its charging can be suppressed. The rechargeable battery 20 can be efficiently charged.

In this case, even if the rechargeable battery 20 is being charged from the fuel battery 30, the electric power tool 1 is usable if power still remains in the rechargeable battery 20. Thus, the rechargeable battery 20 can be charged while power is being supplied to the electric motor 10.

In the first embodiment, a combination of the rechargeable battery voltage detector 22, the load current detector 24, and the CPU 401 which executes S100 and S125 is one example of the state measuring unit of the present invention. The controller 40 is an example of the control unit of the present invention. The ROM 402 is an example of the recording medium of the present invention.

Also, in the first embodiment, a combination of S100, S115 and S125 is an example of the state measuring step of the present invention. A combination of S120, S130-S150, S170 and S180-S200 is an example of the control step of the present invention.

### [Second Embodiment]

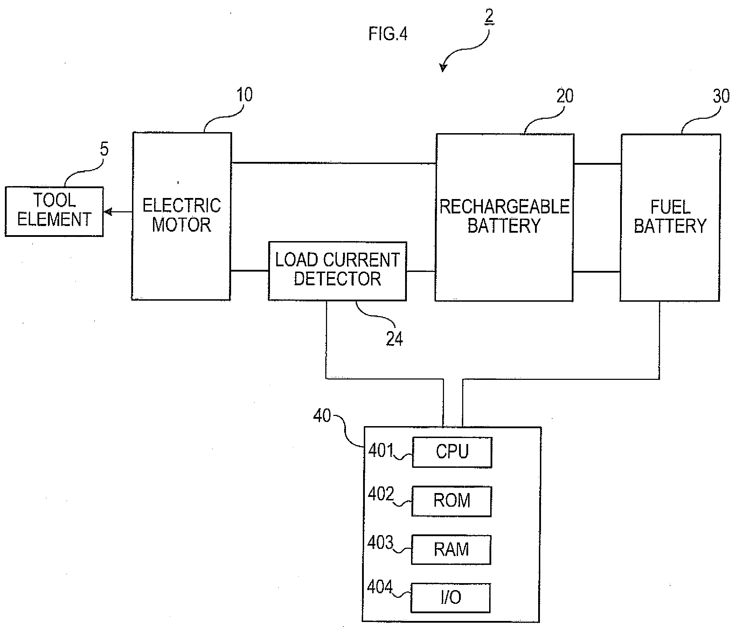

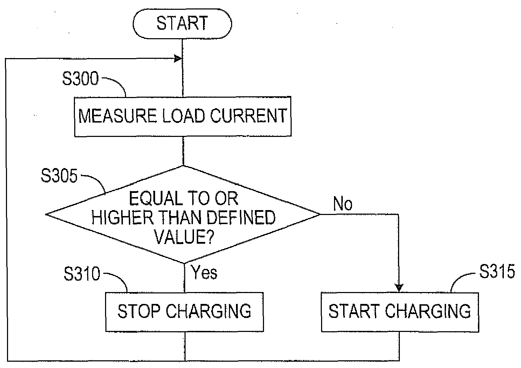

The electric power tool in a second embodiment is an electric power tool which detects whether or not the rechargeable battery 20 is in a discharge state in the electric power tool 1 of the first embodiment. The second embodiment will be described based on FIGS. 4 and 5.

As shown in FIG. 4, the electric power tool 2 is an electric power tool in which the motor switch 12, the rechargeable battery voltage detector 22, the fuel battery voltage detector 32 and the fuel battery current detector 34 are removed from the electric power tool 1 of the first embodiment.

In the control process executed in the controller 40, the load current value is measured from the voltage value of the detection signal of the load current detector 24 in S300, and it is determined in S305 whether or not the load current value measured in S300 is equal to or higher than a predetermined defined value, as shown in FIG. 5.

If the load current value is equal to or higher than the defined value, it means that power is being supplied from the rechargeable battery 20 to the electric motor 10, that is, the rechargeable battery 20 is in a discharge state.

Here, the "defined value" is a current value sufficient to determine that the rechargeable battery 20 is in a discharge state, which is determined according to the specific property of the electric motor 10 to be used, in consideration of detection noise, etc.

If it is determined that the load current value is equal to or higher than the defined value (S305: Yes), the process moves to S310. If it is determined that the load current value is lower than the defined value (S305: No), the process moves to S315.

In S310, charging from the fuel battery 30 to the rechargeable battery 20 is stopped. Thereafter, the process returns to S300. The control process is repeated. Also, in S315, charging from the fuel battery 30 to the rechargeable battery 20 is started. Thereafter, the process returns to S300. The control process is repeated.

In the electric power tool 2 in the second embodiment, whether or not the rechargeable battery 20 is in a discharge state can be determined merely by determining whether or not the value of the output current of the rechargeable battery 20 is equal to or higher than the defined value. Accordingly, with a very simple configuration of only using the load current detector 24, charging of the rechargeable battery 20 by the fuel battery 30 can be controlled. The electric power tool 2 can be reduced in size.

Also, even in case that the same terminal is used for the output and input of the rechargeable battery 20, particularly, even if the rechargeable battery 20 and the fuel battery 30 are connected in parallel when seen from the electric motor 10 side which is a load to the rechargeable battery 20, the rechargeable battery 20 is charged by the fuel battery 30 when the rechargeable battery 20 is not discharged, and the rechargeable battery 20 is not charged by the fuel battery 30 when the rechargeable battery 20 is discharged.

Accordingly, an influence given by the load of the electric motor 10 to the fuel battery 30 is suppressed. In other words, since an influence given to performance such as the life of the fuel battery 30 by load fluctuation of the electric motor 10 is suppressed, the life of the fuel battery 30 can be prolonged.

In the second embodiment, a combination of the load current detector 24 and the CPU 401 which executes S300 is one example of the state measuring unit of the present invention. The controller 40 is an example of the control unit of the present invention. The ROM 402 is an example of the recording medium of the present invention.

Also, in the second embodiment, S300 is an example of the state measuring step of the present invention. A combination of S305-S315 is an example of the control step of the present invention

### [Third Embodiment]

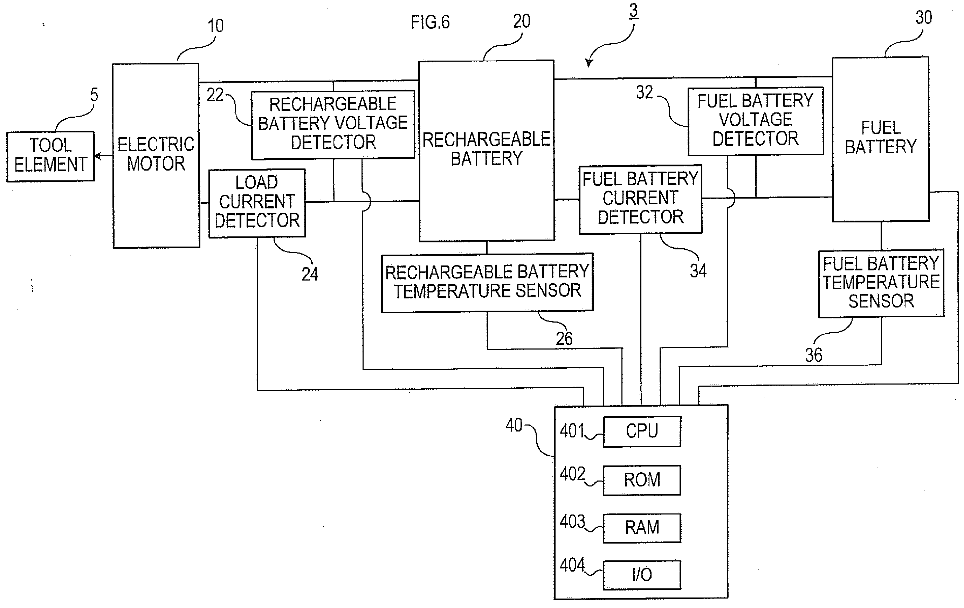

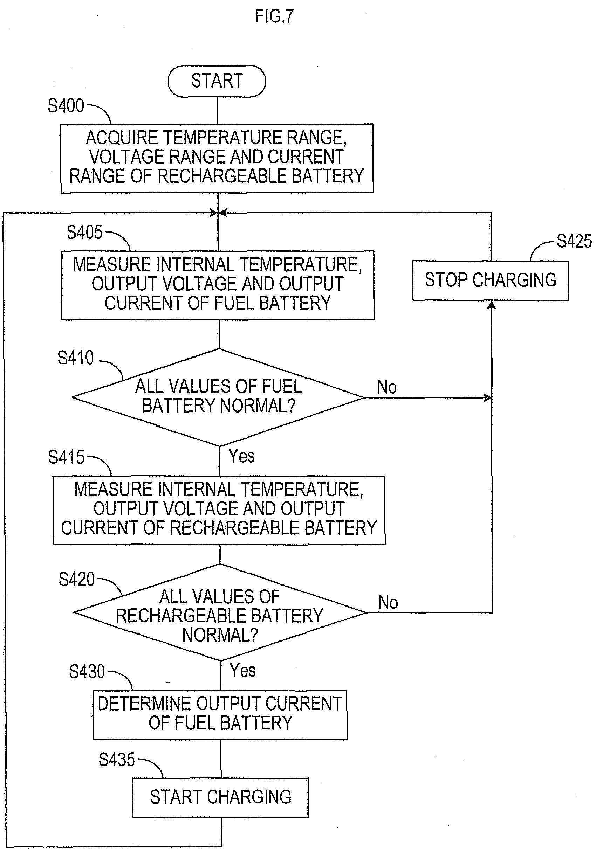

Now, an electric power tool 3 in a third embodiment will be described based on FIGS. 6 and 7.

The electric power tool 3 is configured to control charging of the rechargeable battery 20 by the fuel battery 30 based on internal temperatures, output voltages and output currents of the rechargeable battery 20 and the fuel battery 30.

As shown in FIG. 6, the electric power tool 3 has a configuration in which the motor switch 12 and the informing device 50 are removed from the electric power tool 1 in the first embodiment, and a rechargeable battery temperature sensor 26 and a fuel battery temperature sensor 36 are added. The same reference numerals are applied to the same components as those of the electric power tool 1 in the first embodiment. The description thereof is not repeated.

The rechargeable battery temperature sensor 26 outputs a detection signal having a voltage value according to an inner temperature of the rechargeable battery 20. The fuel battery temperature sensor 36 outputs a detection signal having a voltage value according to an inner temperature of the fuel battery 30.

The rechargeable battery temperature sensor 26 and the fuel battery temperature sensor 36 may be of any type of sensor. For example, the rechargeable battery temperature sensor 26 and the fuel battery temperature sensor 36 may be semiconductor sensors such as thermocouples, silicon diodes and GaAlAs diodes, or resistance sensors such as platinum resistance sensors, rhodium-iron resistance sensors and Cernox resistance sensors.

The internal temperature of the rechargeable battery 20 means a temperature inside the rechargeable battery 20 in which power generation reaction is occurring. The internal temperature of the fuel battery 30 means a temperature inside the fuel battery 30 in which power generation reaction is occurring.

Accordingly, the rechargeable battery temperature sensor 26 and the fuel battery temperature sensor 36 may be a sort of sensors which directly insert a probe into the rechargeable battery 20 and the fuel battery 30, or a sort of sensors which indirectly detect the internal temperature from outside of the rechargeable battery 20 and the fuel battery 30 or from outside atmosphere, for example, sensors which detect radiant heat.

As shown in FIG. 7, in the control process in the controller 40, a range of the output voltage, a range of the output current and a predetermined charging condition (a range of the internal temperature, in the third embodiment) of the rechargeable battery 20 are acquired in S400. The range of the output voltage, the range of output current and the predetermined charging condition of the rechargeable battery 20 are prestored in the ROM 402.

In subsequent S405, the internal temperature of the fuel battery 30 is measured based on the voltage value of the detection signal of the fuel battery temperature sensor 36. The output voltage value of the fuel battery 30 is also measured based on the voltage value of the detection signal of the fuel battery voltage detector 32. An output current value of the fuel battery 30 is also measured based on the voltage value of the detection signal of the fuel battery current detector 34.

In subsequent S410, it is determined whether or not all measured values of the internal temperature, output voltage and output current of the fuel battery 30 are normal. Here, it is determined normal if each of the values of the internal temperature, the output voltage and the output current is within the temperature range, the voltage range and the current range acquired in S400, respectively.

If it is determined that all the values of the internal temperature, the output voltage and the output current are normal (S410: Yes), the process moves to S415. If it is determined that at least one of the values of the internal temperature, the output voltage and the output current is not normal (S410: No), the process moves to S425.

In S415, the inner temperature of the rechargeable battery 20 is measured based on the voltage value of the detection signal of the rechargeable battery temperature sensor 26. The output voltage value of the rechargeable battery 20 is also measured based on the voltage value of the detection signal of the rechargeable battery voltage detector 22. The output current value of the rechargeable battery 20 is also measured based on the voltage value of the detection signal of the load current detector 24.

In subsequent S420, it is determined whether or not all measured values of the internal temperature, output voltage and output current of the rechargeable battery 20 are normal. Here, it is determined that all the values of the internal temperature, the output voltage and the output current of the rechargeable battery 20 are normal if the values of the internal temperature, the output voltage and the output current are within the temperature range, the voltage range and the current range acquired in S400.

If it is determined that all the internal temperature, the output voltage and the output current are normal (S420: Yes), the process moves to S430. If it is determined that at least one of the internal temperature, the output voltage and the output current is not normal (S420: No), the process moves to S425.

In S425, charging from the fuel battery 30 to the rechargeable battery 20 is stopped. The process moves to S405.

In S430, a value of the output current to be outputted by the fuel battery 30 is determined at least based on the internal temperatures and the output voltages of the rechargeable battery 20 and the fuel battery 30. The value of the output current of the fuel battery 30 may be determined by adjusting a fuel flow supplied to the fuel battery 30, or by a control circuit included in the fuel battery 30. A relation between the output current and the fuel flow is individually defined depending on the type of fuel battery to be used. Thus, detailed description thereof is omitted.

In subsequent S435, charging from the fuel battery 30 to the rechargeable battery 20 is started.

In the electric power tool 3 as such, charging of the rechargeable battery 20 by the fuel battery 30 is controlled based on the values of the internal temperature, the output voltage and the output current of the rechargeable battery 20 and the values of the internal temperature, the output voltage and the output current of the fuel battery 30.

Accordingly, charging and discharging to and from the rechargeable battery 20 (i.e., operation of the electric power tool 3) can be efficiently performed, according to a power generation property which depends on the internal temperature of the fuel battery 30 and a charging property which depends on the internal temperature of the rechargeable battery 20. Failure of the fuel battery 30 and the rechargeable battery 20 can be suppressed.

In the third embodiment, a combination of the rechargeable battery temperature sensor 26 and the CPU 401 which executes S415 is one example of the rechargeable battery temperature measuring unit of the present invention. A combination of the rechargeable battery voltage detector 22, the load current detector 24 and the CPU 401 which executes S415 is an example of the state measuring unit of the present invention. A combination of the fuel battery voltage detector 32, the fuel battery current detector 34 and the CPU 401 which executes S415 is an example of the fuel battery output measuring unit of the present invention. A combination of the fuel battery temperature sensor 36 and the CPU 401 which executes S405 is one example of the fuel battery temperature measuring unit of the present invention. The controller 40 is an example of the control unit of the present invention. The ROM 402 is an example of the recording medium of the present invention.

Also, in the third embodiment, S415 is an example of the state measuring step of the present invention. A combination of S420-S430 is an example of the control step of the present invention.

### [Other embodiments]

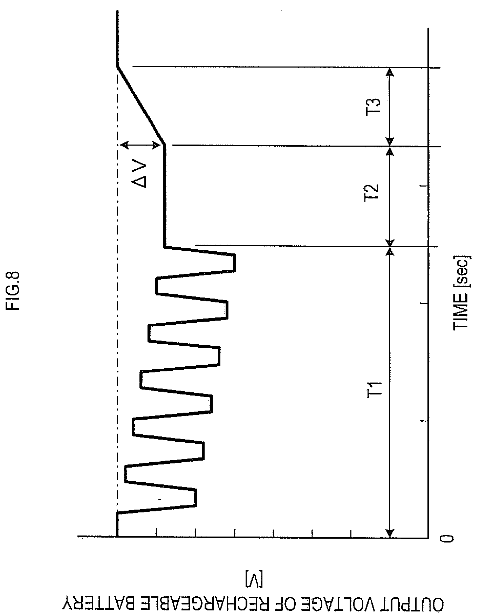

(1) In the first embodiment, charging of the rechargeable battery 20 by the fuel battery 30 is controlled by switching charging patterns based on the remaining amount of power in the rechargeable battery 20 and the load current of the electric motor 10. The charging patterns may be switched based only on the remaining amount of power in the rechargeable battery 20.
   In this case, the remaining amount of power in the rechargeable battery 20 is measured based on the output voltage of the rechargeable battery 20. If the measured remaining amount of power is equal to or lower than the rated value, charging from the fuel battery 30 to the rechargeable battery 20 is started. When the remaining amount of power in the rechargeable battery 20 has reached the rated value, charging from the fuel battery 30 to the rechargeable battery 20 is stopped.
   Particularly, as shown in FIG. 8, charging is not conducted while the electric power tool 1 is used (period indicated by T1 in FIG. 8). As a result that discharging by the rechargeable battery 20 is repeated (portion indicated by pulse train in FIG. 8), the output voltage of the rechargeable battery 20 decreases by a certain voltage (value indicated by ΔV in FIG. 8), and discharging is stopped for a certain period (period indicated by T2 in FIG. 8). Then, charging from the fuel battery 30 to the rechargeable battery 20 is conducted.
   When the voltage of the rechargeable battery 20 increases to the rated value (period indicated by T3 in FIG. 8), charging is stopped.
(2) In the first embodiment, charging is controlled based on the remaining amount of power in the rechargeable battery 20 and the load current of the electric motor 10. In the second embodiment, charging is controlled depending on whether or not the rechargeable battery 20 is in a discharge state. In the third embodiment, charging is controlled based on the output voltages, the output currents and the internal temperatures of the rechargeable battery 20 and the fuel battery 30. Charging may be controlled by combining these embodiments.
(3) In the first to the third embodiments, the electric motor 10, the rechargeable battery 20 and the fuel battery 30 are connected via a conductive line. These components may be directly connected at their terminals without a conductive line, so that reduction in size can be achieved.
(4) In the first embodiment, the remaining amount of power in the rechargeable battery 20 is measured based on the output voltage value of the rechargeable battery 20. The remaining amount of power may be measured by integration of a discharge current of the rechargeable battery 20.
(5) In the third embodiment, both the output voltage and the output current of the rechargeable battery 20, and both the output voltage and the output current of the fuel battery 30 are measured. One of the output voltage and the output current of the rechargeable battery 20, and one of the output voltage and the output current of the fuel battery 30 may be measured. In this case, charging of the rechargeable battery 20 may be controlled based on the internal temperature of the rechargeable battery 20, one of the output voltage and the output current of the rechargeable battery 20, the internal temperature of the fuel battery 30, and one of the output voltage and the output current of the fuel battery 30.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An electric power tool (1) comprising:
a tool element (5);
an electric motor (10) adapted to receive power supply to drive the tool element (5);
a rechargeable battery (20) that is electrically connected to the electric motor (10) and adapted to supply power to the electric motor (10);
a fuel battery (30) that is electrically connected to the rechargeable battery (20) and adapted to charge the rechargeable battery (20);
**characterized by** comprising:
a state measuring unit (22, 24, 401, S100, S125) adapted to measure a state of the rechargeable battery (20); and
a control unit (40) adapted to control charging of the rechargeable battery (20) by the fuel battery (30) at least based on the state of the rechargeable battery (20) measured by the state measuring unit (22, 24, 401, S100, S125),
wherein
the state measuring unit (22, 401, S125) is adapted to measure at least a remaining amount of power in the rechargeable battery (20);
the control unit (40) is adapted to control the charging at least based on the remaining amount of power in the rechargeable battery (20) measured by the state measuring unit (22, 401, S125); and
the control unit (40) is further adapted to control the charging by switching an output of the fuel battery (30) to one of a high output, a low output and an off output, the high output being a rated output of the fuel battery (30), and the low output being an output between the rated output and the off output of the fuel battery (30).

2. The electric power tool (1) according to claim 1, wherein
the state measuring unit (22, 401, S125) is adapted to measure the remaining amount of power in the rechargeable battery (20) based on an output voltage of the rechargeable battery (20).

3. The electric power tool (1) according to claim 1 or 2, wherein
the state measuring unit (22, 24, 401, S100, S125) is further adapted to measure an output current of the rechargeable battery (20); and
the control unit (40) is adapted to control the charging at least based on the remaining amount of power and the output current of the rechargeable battery (20) measured by the state measuring unit (22, 24, 401, S100, S125).

4. The electric power tool (1) according to claim 3, wherein the control unit (40) is further configured to control the charging by switching the output of the fuel battery (30) to one of the high output, the low output and the off output based on whether an average value of the output current of the rechargeable battery (20) for a certain period is equal to or larger than a value of an output current of the fuel battery (30), and the remaining amount of power in the rechargeable battery (20).

5. The electric power tool (1) according to any of claims 1 to 3, wherein
the state measuring unit (24, 401, S300) is adapted to measure an output current of the rechargeable battery (20), and
the control unit (40) is adapted to stop the charging when a value of the output current measured by the state measuring unit (24, 401, S300) exceeds a predetermined threshold, and to carry out the charging when the value of the output current is equal to or lower than the threshold..

6. A program comprising instructions which, when executed by a computer (40) provided on an electric power tool (1) including a rechargeable battery (20) and a fuel battery (30) that charges the rechargeable battery (20), causes the computer to perform:
a state measuring step (S100, S115, S125, S300, S415) of measuring at least a remaining amount of power in the rechargeable battery (20); and
a control step (S120, S130-S150, S170, S180-S200, S305-S315, S420-S430) of controlling charging of the rechargeable battery (20) by the fuel battery (30) by switching an output of the fuel battery (30) to one of a high output, a low output and an off output, at least based on the remaining amount of power in the rechargeable battery (20) measured in the state measuring step (S100, S115, S125, S300, S415), the high output being a rated output of the fuel battery (30), and the low output being an output between the rated output and the off output of the fuel battery (30).

## Patentansprüche

1. Elektrisches Kraftwerkzeug (1) mit:
einem Werkzeugelement (5);
einem Elektromotor (10), der angepasst ist zum Empfangen einer Versorgungsleistung zum Antreiben des Werkzeugelements (5);
einer wiederaufladbaren Batterie (20), die elektrisch mit dem Elektromotor (10) verbunden und angepasst ist zur Lieferung von Leistung an den Elektromotor (10);
einer Kraftstoffbatterie (30), die mit der wiederaufladbaren Batterie (20) elektrisch verbunden und angepasst ist zum Laden der wiederaufladbaren Batterie (20);
**gekennzeichnet durch**
eine Zustandsmesseinheit (22, 24, 401, S100, S 125), die angepasst ist zum Messen eines Zustands der wiederaufladbaren Batterie (20); und
eine Steuerungseinheit (40), die angepasst ist zum Steuern des Ladens der wiederaufladbaren Batterie (20) **durch** die Kraftstoffbatterie (30) zumindest basierend auf dem Zustand der wiederaufladbaren Batterie (20), der von der Zustandsmesseinheit (22, 24, 401, S100, S 125) gemessen worden ist, wobei
die Zustandsmesseinheit (22, 401, S125) angepasst ist zum Messen von mindestens einer verbleibenden Leistungsmenge in der wiederaufladbaren Batterie (20);
die Steuerungseinheit (40) angepasst ist zum Steuern des Ladens, mindestens basierend auf der verbleibenden Leistungsmenge in der wiederaufladbaren Batterie, die von der Zustandsmesseinheit (22, 401, S125) gemessen worden ist; und
die Steuerungseinheit (40) ferner angepasst ist zum Steuern des Ladens **durch** Schalten einer Ausgabe der Kraftstoffbatterie (30) auf eine hohe Ausgabe, eine niedrige Ausgabe oder keine Ausgabe, wobei die hohe Ausgabe eine Nennausgabe der Kraftstoffbatterie (30) ist, und die niedrige Ausgabe eine Ausgabe zwischen der Nennausgabe und der keine Ausgabe der Kraftstoffbatterie (30) ist.

2. Elektrisches Kraftwerkzeug (1) nach Anspruch 1, bei dem die Zustandsmesseinheit (22, 401, S 125) angepasst ist zum Messen der verbleibenden Leistungsmenge in der wiederaufladbaren Batterie (20) basierend auf einer Ausgangsspannung der wiederaufladbaren Batterie (20).

3. Elektrisches Kraftwerkzeug (1) nach Anspruch 1 oder 2, bei dem
die Zustandsmesseinheit (22, 24, 401, S100, S 125) ferner angepasst ist zum Messen eines Ausgangsstroms der wiederaufladbaren Batterie (20); und
die Steuerungseinheit (40) angepasst ist zum Steuern des Ladens mindestens basierend auf der verbleibenden Leistungsmenge und dem Ausgangsstrom der wiederaufladbaren Batterie (20), der von der Zustandsmesseinheit (22, 24, 401, S100, S 125) gemessen worden ist.

4. Elektrisches Kraftwerkzeug (1) nach Anspruch 3, bei dem die Steuerungseinheit (40) ferner angepasst ist zum Steuern des Ladens durch Schalten der Ausgabe der Kraftstoffbatterie (30) auf eine hohe Ausgabe, niedrige Ausgabe oder keine Ausgabe basierend darauf, ob ein Durchschnittswert des Ausgangsstroms der wiederaufladbaren Batterie (20) für eine bestimmte Zeitperiode gleich oder größer ist als ein Wert eines Ausgangsstroms der Kraftstoffbatterie (30), und der verbleibenden Leistungsmenge in der wiederaufladbaren Batterie (20).

5. Elektrisches Kraftwerkzeug (1) nach einem der Ansprüche 1 bis 3, bei dem
die Zustandsmesseinheit (24, 401, S300) angepasst ist zum Messen eines Ausgangsstroms der wiederaufladbaren Batterie (20), und
die Steuerungseinheit (40) angepasst ist zum Stoppen des Ladens, wenn ein Wert des Ausgangsstroms, der von der Zustandsmesseinheit (24, 401, S300) gemessen worden ist, einen vorbestimmten Schwellenwert überschreitet, und zum Durchführen des Ladens, wenn der Wert des Ausgangsstroms gleich oder kleiner als der Schwellenwert ist.

6. Programm mit Befehlen, die, wenn sie von einem Computer (40) durchgeführt werden, der auf einem elektrischen Kraftwerkzeug (1) vorgesehen ist, das eine wiederaufladbare Batterie (20) und eine Kraftstoffbatterie (30) aufweist, die die wiederaufladbare Batterie (20) lädt, den Computer veranlassen zum Durchführen von:
einem Zustandsmessschritt (S100, S115, S125, S300, S415) zum Messen von mindestens einer verbleibenden Leistungsmenge in der wiederaufladbaren Batterie (20); und
einem Steuerungsschritt (S120, S130-S150, S170, S180-S200, S305-S315, S420-S430) zum Steuern des Ladens der wiederaufladbaren Batterie (20) durch die Kraftstoffbatterie (30) durch Schalten einer Ausgabe der Kraftstoffbatterie (30) auf eine hohe Ausgabe, niedrige Ausgabe oder keine Ausgabe, mindestens basierend auf der verbleibenden Leistungsmenge in der wiederaufladbaren Batterie (20), die in dem Zustandsmessschritt (S100, S 115, S125, S300, S415) gemessen worden ist, wobei die hohe Ausgabe eine Nennausgabe der Kraftstoffbatterie (30) ist, und die niedrige Ausgabe eine Ausgabe zwischen der Nennausgabe und der keine Ausgabe der Kraftstoffbatterie (30) ist.

## Revendications

1. Outil électrique (1), comprenant :
un élément d'outil (5) ;
un moteur électrique (10) apte à recevoir une alimentation électrique pour actionner l'élément d'outil (5) ;
une batterie rechargeable (20) qui est connectée électriquement au moteur électrique (10) et qui est apte à fournir du courant au moteur électrique (10) ;
une pile à combustible (30) qui est connectée électriquement à la batterie rechargeable (20) et qui est apte à charger la batterie rechargeable (20),
**caractérisé en ce qu'**il comprend :
une unité de mesure d'état (22, 24, 401, S100, S125) apte à mesurer un état de la batterie rechargeable (20) ; et
une unité de commande (40) apte à commander la charge de la batterie rechargeable (20) par la pile à combustible (30) au moins sur la base de l'état de la batterie rechargeable (20) mesuré par l'unité de mesure d'état (22, 24, 401, S100, S125),
dans lequel :
l'unité de mesure d'état (22, 401, S125) est apte à mesurer au moins une quantité restante de courant dans la batterie rechargeable (20) ;
l'unité de commande (40) est apte à commander la charge au moins sur la base de la quantité restante de courant dans la batterie rechargeable (20) mesurée par l'unité de mesure d'état (22, 401, S125) ; et
l'unité de commande (40) est en outre apte à commander la charge en commutant une sortie de la pile à combustible (30) sur l'une parmi une puissance haute, une puissance basse et une puissance coupée, la puissance haute étant une puissance nominale de la pile à combustible (30) et la puissance basse étant une puissance entre la puissance nominale et la puissance coupée de la pile à combustible (30).

2. Outil électrique (1) selon la revendication 1, dans lequel :
l'unité de mesure d'état (22, 401, S125) est apte à mesurer la quantité restante de courant dans la batterie rechargeable (20) sur la base d'une tension de sortie de la batterie rechargeable (20).

3. Outil électrique (1) selon la revendication 1 ou 2, dans lequel:
l'unité de mesure d'état (22, 24, 401, S100, S125) est en outre apte à mesurer un courant de sortie de la batterie rechargeable (20) ; et
l'unité de commande (40) est apte à commander la charge au moins sur la base de la quantité restante de courant et du courant de sortie de la batterie rechargeable (20) mesurés par l'unité de mesure d'état (22, 24, 401, S100, S125).

4. Outil électrique (1) selon la revendication 3, dans lequel :
l'unité de commande (40) est en outre configurée pour commander la charge en commutant la sortie de la pile à combustible (30) sur l'une parmi la puissance haute, la puissance basse et la puissance coupée selon qu'une valeur moyenne du courant de sortie de la batterie rechargeable (20) pendant une certaine période est égale ou supérieure à une valeur d'un courant de sortie de la pile à combustible (30), et à la quantité de courant restante dans la batterie rechargeable (20).

5. Outil électrique (1) selon l'une quelconque des revendications 1 à 3, dans lequel :
l'unité de mesure d'état (24, 401, S300) est apte à mesurer un courant de sortie de la batterie rechargeable (20) ; et
l'unité de commande (40) est apte à arrêter la charge lorsqu'une valeur du courant de sortie mesuré par l'unité de mesure d'état (24, 401, S300) dépasse un seuil prédéterminé et à exécuter la charge lorsque la valeur du courant de sortie est égale ou inférieure au seuil.

6. Programme contenant des instructions qui, lorsqu'elles sont exécutées par un ordinateur (40) installé sur un outil électrique (1) comprenant une batterie rechargeable (20) et une pile à combustible (30) qui charge la batterie rechargeable (20), entraînent l'ordinateur à exécuter :
une étape de mesure d'état (S100, S115, S125, S300, S415) pour mesurer au moins une quantité restante de courant dans la batterie rechargeable (20) ; et
une étape de commande (S120, S130-S150, S170, S180-S200, S305-S315, S420-S430) pour commander la charge de la batterie rechargeable (20) par la pile à combustible (30) en commutant une sortie de la pile à combustible (30) sur l'une parmi une puissance haute, une puissance basse et une puissance coupée, au moins sur la base de la quantité restante de courant dans la batterie rechargeable (20) mesurée lors de l'étape de mesure d'état (S100, S115, S125, S300, S415), la puissance haute étant une puissance nominale de la pile à combustible (30) et la puissance basse étant une puissance entre la puissance nominale et la puissance coupée de la pile à combustible (30).
